# EUROPÄISCHE PATENTSCHRIFT

(11) **EP 3 142 878 B1**
(45) Veröffentlichungstag und Bekanntmachung des Hinweises auf die Patenterteilung: **06.06.2018**
(21) Anmeldenummer: 15722670.5
(22) Anmeldetag: 28.04.2015
(51) Int. Cl.: B60J 7/00, B60J 1/20

(54) **ROLLOANORDNUNG MIT SEITENFÜHRUNG**
ROLLER BLIND ARRANGEMENT HAVING LATERAL GUIDANCE
ENSEMBLE STORE AVEC GUIDAGE LATÉRAL

(30) Priorität: 16.05.2014 DE 102014106950
(43) Veröffentlichungstag der Anmeldung: 22.03.2017
(73) Patentinhaber: Webasto SE, 82131 Stockdorf (DE)
(72) Erfinder: HOELZEL, Dominik, 82131 Stockdorf (DE); ROCKELMANN, Andreas, 82131 Stockdorf (DE); SCHUETT, Thomas, 82131 Stockdorf (DE); SCHANDEL, Susanne, 82131 Stockdorf (DE)
(74) Vertreter: advotec.
(86) Internationale Anmeldenummer: PCT/EP2015/059190
(87) Internationale Veröffentlichungsnummer: WO 2015/173007

(56) Entgegenhaltungen:
- EP-A2- 1 923 245
- DE-A1-102008 035 514
- DE-A1-102012 219 523

## Beschreibung

Die Erfindung betrifft eine Rolloanordnung für ein Kraftfahrzeug zur Abschattung eines transparenten Fahrzeugabschnitts gemäß dem Oberbegriff des Patentanspruches 1.

Eine derartige Rolloanordnung ist aus der Druckschrift DE 10 2006 054 881 A1 bekannt und umfasst eine Rollobahn, die zur Abschattung eines transparenten Dachausschnitts des betreffenden Kraftfahrzeuges von einer Wickeleinrichtung abwickelbar ist bzw. zur Freigabe des transparenten Dachausschnitts auf die Wickeleinrichtung aufwickelbar ist. An einem sich in Fahrzeugquerrichtung erstreckenden Rand ist die Rollobahn an die insbesondere als Wickelwelle ausgebildete Wickeleinrichtung angebunden. An ihren bezogen auf eine vertikale Fahrzeuglängsmittelebene beidseits angeordneten Rändern weist die Rollobahn Führungsbänder auf, die jeweils in einer sich in Fahrzeuglängsrichtung erstreckenden Führungsschiene geführt sind. Damit kann die Rollobahn in Fahrzeugquerrichtung straff gehalten werden. Zur Betätigung kann die Rolloanordnung einen Antriebsmotor aufweisen, der zwei Triebmittel darstellende Antriebskabel antreibt, die einen runden Querschnitt haben und die jeweils in einer der Führungsschienen zu einem Zugspriegel geführt sind, der an dem der Wickeleinrichtung abgewandten Rand der Rollobahn angeordnet ist. Die als Steigungskabel ausgebildeten Antriebskabel bilden gleichzeitig die seitlichen Führungsbänder der Rollobahn, und zwar dadurch, dass die Rollobahn beim Einlaufen in die Führungsschienen mittels einer aufwändigen Vorrichtung um die Antriebskabel geschlagen wird. Die Antriebskabel verkrallen sich an der Rollobahn über eine raue, bürstenartige Oberfläche, die von einer Vielzahl feiner Borsten gebildet ist. Das Umschlagen der Rollobahn um die Antriebskabel und das Verkrallen der Borsten an der Rollobahn führen zu einem hohen Rollobahnverschleiß.

Aus der Druckschrift EP 1 923 245 A2 ist ein Dachfensterrollo eines Kraftfahrzeugs bekannt, umfassend eine Rollobahn, die zu einem Rollowickel aufwickelbar ist und an ihren bezogen auf eine vertikale Rollolängsmittelebene seitlichen Rändern jeweils in einer Führungsschiene geführt ist. Die Rolloanordnung hat des Weiteren eine Antriebseinrichtung mit einem Antriebsritzel, das zwei Steigungskabel antreibt, die jeweils in einer Führungsbahn der Führungsschiene geführt sind.

Aus der Druckschrift DE 10 2012 219 523 A1 ist eine Rollovorrichtung für ein Kraftfahrzeug mit einer flexiblen Rollobahn bekannt, die auf einer Rollowelle auf- und abwickelbar gehalten ist. Ein Zugspriegel der Rollobahn ist in beidseits angeordneten Führungsschienen geführt. Zudem ist die Rollobahn über Seitenverstärkungen in den Führungsschienen geführt. Der Antrieb der Rollobahn bzw. das Auf- und Abwickeln der Rollobahn erfolgt durch Zug-Druckmittel-Stränge, die in den Führungsschienen geführt sind und jeweils als Lochbandstrang ausgebildet sind.

Aus der Druckschrift DE 10 2008 035 514 A1 ist ein manuell betätigbares Dachfensterrollo für ein Kraftfahrzeug bekannt, umfassend eine Rollobahn, die in seitlichen Führungsschienen geführt und dort mittels eines Steigungskabels gehalten ist.

Der Erfindung liegt die Aufgabe zugrunde, eine gemäß der einleitend genannten Gattung ausgebildete Rolloanordnung zu schaffen, bei der eine gleichzeitige Nutzung von Triebmitteln als Antriebsorgane und als Führungsorgane der Rollobahn in konstruktiv einfacher Weise möglich ist.

Diese Aufgabe ist erfindungsgemäß durch die Rolloanordnung mit den Merkmalen des Patentanspruches 1 gelöst.

Der Kern der Erfindung liegt mithin darin, dass die Rollobahn innerhalb der Führungsbahnen der Führungsschienen durch die als Zahnriemen ausgebildeten Triebmittel zwischen deren Unterseite und dem Führungsbahnboden verpresst ist. Dies führt zu einer zumindest angenähert U-förmigen Umlenkung der Rollobahn innerhalb der Führungsbahnen. Beim Einlaufen der Rollobahn in die Führungsbahnen der Führungsschienen wird die Umlenkung allein durch die ebenfalls in die Führungsbahnen einlaufenden Zahnriemen bewirkt, die die Rollobahn in die Führungsbahnen drücken. Durch die Umlenkung kann sich die Rollobahn wiederum an den Zahnkanten der auf mindestens einer Seite des jeweiligen Zahnriemens angeordneten Verzahnung verkrallen, so dass die Rollobahn quer zur Ausziehrichtung straff gespannt sein kann. Die Verzahnung der Zahnriemen kann also direkt in das Material der Rollobahn eingreifen und sich dort verhaken. Zudem können die Zahnriemen hohe Haltekräfte auf die Rollobahn ausüben. Gleichzeitig kann eine Betätigung der Zahnriemen ein Aufwickeln oder Abwickeln der Rollobahn bewirken, und zwar mit geringen Kräften. Da die Umlenkung der Rollobahn gering sein kann und das Material der Rollobahn eine gewisse Elastizität hat, ist auch ein faltenfreies Aufwickeln der Rollobahn zu einem Rollowickel gewährleistet.

Die Zahnriemen, die einen im Wesentlichen rechteckigen Querschnitt haben, können bezogen auf die Ebene der Rollobahn hochkant eingebaut sein. Damit können die Führungsschienen, in der die Zahnriemen geführt sind, entsprechend schmal ausgeführt sein, so dass diese den Durchsichtsbereich des transparenten Fahrzeugabschnitts nicht oder nur unwesentlich beeinträchtigen.

Bei einer bevorzugten Ausführungsform der Rolloanordnung nach der Erfindung haben die Führungsbahnen ebenfalls jeweils einen im Wesentlichen rechteckigen Querschnitt, der mit dem Querschnitt des jeweiligen Zahnriemens korrespondiert, wobei die Rollobahn über einen jeweiligen seitlichen Schlitz in die Führungsbahnen eingeführt ist und in den Führungsbahnen jeweils zwischen der betreffenden Führungsschiene und dem betreffenden Zahnriemen angeordnet ist.

Um die zumindest angenähert U-förmige oder umgekehrt U-förmige Umlenkung der Rollobahn in den Führungsbahnen jeweils realisieren zu können, ist der Schlitz zweckmäßigerweise beabstandet von dem Boden bzw. der Decke der jeweiligen Führungsbahn angeordnet.

Der Schlitz, über den die Rollobahn in die jeweilige Führungsbahn eingeführt ist, kann sowohl von dem Boden als auch von der Decke der jeweiligen Führungsbahn beabstandet sein.

Bei einer alternativen Ausführungsform ist der Schlitz aber von dem Boden der jeweiligen Führungsbahn beabstandet und bis an die Decke der jeweiligen Führungsbahn herangeführt oder von der Decke der jeweiligen Führungsbahn beabstandet und bis an den Boden der jeweiligen Führungsbahn herangeführt. Grundsätzlich ist es also denkbar, dass die Führungsbahn bei Berücksichtigung der durch den Schlitz vorgegebenen Öffnung eine Umfangswand hat, die im Querschnitt zumindest angenähert C-förmig oder aber im weitesten Sinne G-förmig ist.

Um ein Verklemmen oder Verhaken eines Randbereichs der Rollobahn im Wesentlichen ausschließen zu können, weisen die Führungsbahnen jeweils an der dem Schlitz abgewandten Seite eine Laschenführung auf, in die ein jeweiliger Randstreifen der Rollobahn eingreift.

Zur Vereinfachung der Montage und zur Gewährleistung eines störungsfreien Betriebs der Rolloanordnung nach der Erfindung weisen die Zahnriemen jeweils an zwei einander abgewandten Seiten eine Verzahnung auf. Damit kann bei Verwendung eines einzigen Antriebsritzels für die beiden Zahnriemen ein symmetrischer Aufbau der beidseits angeordneten Führungsanordnungen für die Rollobahn realisiert werden.

Um für unterschiedliche Fahrzeugtypen eine standardisierte Rollobahnführung realisieren zu können, weist eine spezielle Ausführungsform der Rolloanordnung nach der Erfindung eine Rollobahn auf, die an ihren bezogen auf die vertikale Rollolängsmittelebene seitlichen Rändern jeweils ein Führungsband umfasst, das mit einem Zentralabschnitt der Rollobahn verbunden ist und das in der jeweiligen Führungsschiene geführt ist. Die Führungsbänder können ein sogenanntes standardisiertes Stoffmodul darstellen, das unabhängig von dem die Sichtfläche der Rollobahn bildenden Material, das den Zentralabschnitt darstellt, bei Rolloanordnungen nach der Erfindung eingesetzt werden kann. Damit können stets die gleichen Reibparameter innerhalb der vorzugsweise ebenfalls standardisiert ausgebildeten Führungsschienen realisiert werden.

Um die Rolloanordnung möglichst geräusch- und reibungsarm antreiben zu können, sind die Zahnriemen zweckmäßigerweise jeweils zumindest weitgehend torsionsfrei zwischen dem Antriebsritzel und der jeweiligen Führungsschiene geführt.

Um die Bauhöhe der Führungsschienen gering zu halten, können die Zahnriemen jeweils einen Querschnitt haben, dessen Höhen/Breiten-Verhältnis zwischen 0,9 und 1,1 liegt, vorzugsweise etwa 1 beträgt. Diese Ausführung ist insbesondere möglich, wenn die seitlichen Schlitze der Führungsschienen, über die die Rollobahn in Querrichtung in die Führungsbahnen eingeführt ist, bis an die Decke der Führungsbahn oder bis an den Boden der jeweiligen Führungsbahn reichen. Beispielsweise haben die Zahnriemen dann jeweils eine Höhe zwischen etwa 4 mm und etwa 8 mm, so dass die Führungsbahnen entsprechend niedrig ausgeführt sein können. Durch die Stoffspannung der Rollobahn in Rolloquerrichtung erfahren die Zahnriemen jeweils ein Drehmoment um ihre jeweilige Längsachse. Die Zahnriemen stützen sich dann jeweils über ihre in Momentrichtung weisenden Eckflächen an den Wänden der Führungsbahn ab. Damit wird ein Verdrehen der Zahnriemen in den Führungsbahnen verhindert. Eine geeignete Gestaltung der korrespondierenden Führungsflächen der Zahnriemen und der Führungsschienen gewährleistet eine reibungsarme Führung der Zahnriemen.

Die von den Zahnriemen gebildeten Triebmittel können jeweils zu einem Zugspriegel geführt sein, der an dem dem Rollowickel abgewandten Rand der Rollobahn angeordnet ist. Über den Zugspriegel, der von den Triebmitteln betätigt wird, wird beim Abwickeln der Rollobahn die Hauptzugkraft auf die Rollobahn ausgeübt.

Der Zugspriegel ist bei einer zweckmäßigen Ausführungsform der Rolloanordnung nach der Erfindung bezogen auf die Rollolängsmittelebene beidseits jeweils mit einem Kupplungselement versehen, das an dem jeweiligen Zahnriemen angebunden ist.

Die Anbindung der Kupplungselemente an die Zahnriemen kann derart erfolgen, dass sie jeweils in eine Ausnehmung des jeweiligen Zahnriemens formschlüssig eingreifen.

Um die Anzahl der Einzelteile der Rolloanordnung gering zu halten, sind die Kupplungselemente bei einer speziellen Ausführungsform der Rolloanordnung nach der Erfindung jeweils nach einem Spritzgießverfahren an den jeweiligen Zahnriemen angeformt. Damit entfallen die Kupplungselemente als Einzelteile. Vielmehr sind sie Bestandteil der Zahnriemen.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer Rolloanordnung nach der Erfindung sind in der Zeichnung schematisch vereinfacht dargestellt und werden in der nachfolgenden Beschreibung näher erläutert. Es zeigt:
- Figur 1: eine schematische Draufsicht auf ein Dach eines Kraftfahrzeuges mit einer Rolloanordnung nach der Erfindung;
- Figur 2: eine Draufsicht auf die Rolloanordnung in Alleinstellung;
- Figur 3: einen Schnitt durch die Rolloanordnung entlang der Linie III-III in Figur 2; und
- Figur 4: einen Figur 3 entsprechenden Schnitt durch eine alternative Ausführungsform einer Rolloanordnung.

In der Zeichnung ist ein Fahrzeugdach 10 eines ansonsten nicht näher dargestellten Personenkraftwagens gezeigt, das einen Dachausschnitt 12 aufweist, welcher mittels eines hier nicht näher dargestellten, transparenten Deckelelements eines Dachöffnungssystems geschlossen oder zumindest teilweise freigegeben werden kann.

Zur Abschattung des Dachausschnittes 12 umfasst das Fahrzeugdach 10 eine Rolloanordnung 14, die eine Rollobahn 16 aus einem faltbaren bzw. wickelbaren Stoff aufweist.

An ihrer freien Stirnseite weist die Rollobahn 16 einen sich in Fahrzeugquerrichtung erstreckenden Zugspriegel 18 auf. An ihrem dem Zugspriegel 18 abgewandten Rand ist die Rollobahn 16 an einer sich in Fahrzeugquerrichtung erstreckenden Wickelwelle 20 befestigt. Die Wickelwelle 20 umfasst ein drehbar gelagertes Wickelrohr, das mittels einer hier nicht näher dargestellten Wickelfeder in Aufwickelrichtung der Rollobahn 16 vorgespannt ist, so dass sich die Rollobahn 16 bei Freigabe des Zugspriegels 18 bzw. bei einem entsprechenden Verfahren des Zugspriegels 18 in Richtung der Wickelwelle 20 selbsttätig auf die Wickelwelle 20 zu einem Rollowickel aufwickelt.

Zur Führung des Zugspriegels 18 und zur seitlichen Führung der Rollobahn 16 weist die Rolloanordnung 14 bezogen auf eine vertikale Dach- bzw. Rollolängsmittelebene beidseits jeweils eine Führungsschiene 22A bzw. 22B auf, die sich in Fahrzeuglängsrichtung bzw. in Ausziehrichtung der Rollobahn 16 entlang des betreffenden seitlichen Randes des Dachausschnitts 12 erstreckt. Die Führungsschienen 22A und 22B können Bestandteil des Dachöffnungssystems sein oder auch nur der Rolloanordnung 14 zugeordnet sein.

Zur Betätigung weist die Rolloanordnung einen elektrischen Antriebsmotor 24 auf, der ein Antriebsritzel 26 antreibt, dessen Achse rechtwinkelig zur Ebene eines ausgezogenen Abschnitts der Rollobahn 16 steht. Zur Kraftübertragung steht das Antriebsritzel 26 mit zwei Kunststoffzahnriemen 28A und 28B in Eingriff, die Triebmittel der Rolloanordnung 14 darstellen. Die Kunststoffzahnriemen 28A und 28B sind jeweils ausgehend von dem Antriebsritzel 26 über eine Kurvenbahn torsionsfrei in eine Führungsbahn 30 der betreffenden Führungsschiene 22A bzw. 22B und in der Führungsbahn 30 zu dem Zugspriegel 18 geführt und an diesen angebunden.

Die Kunststoffzahnriemen 28A und 28B sind Zahnriemen, die an zwei einander gegenüberliegenden Seiten jeweils eine Verzahnung 32 bzw. 34 aufweisen, wobei bei dem Kunststoffzahnriemen 28A die bezogen auf die Rollobahn 16 außen liegende Verzahnung und bei dem Kunststoffzahnriemen 28B die bezogen auf die Rollobahn 16 innen liegende Verzahnung mit dem Antriebsritzel 26 in Eingriff steht. Die Verzahnungen 32 und 34 haben jeweils Zähne, die sich rechtwinkelig zur Ebene der Rollobahn 16 von einer Zahnriemenoberseite zu einer Zahnriemenunterseite erstrecken.

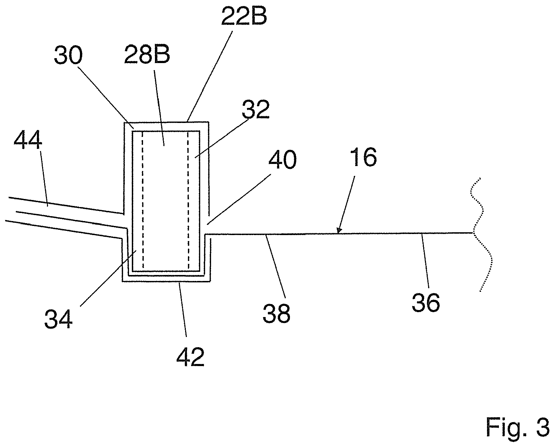

Wie Figur 3 zu entnehmen ist, haben die Zahnriemen 28A und 28B jeweils einen im Wesentlichen rechteckigen Querschnitt, der mit einem im Wesentlichen rechteckigen Querschnitt der betreffenden Führungsbahn 30 der jeweiligen Führungsschiene 22A bzw. 22B korrespondiert. Die Verzahnungen 32 und 34 sind bezogen auf den Querschnitt an den seitlichen Längsseiten des Zahnriemens angeordnet, die durch die Unterseite und die Oberseite miteinander verbunden sind.

Die Rollobahn 16 umfasst einen Zentralabschnitt 36, der die Sichtfläche der Rollobahn 16 bildet. An seinen bezogen auf die vertikale Dachlängsmittelebene beidseits angeordneten Rändern ist der Zentralabschnitt 36 beidseits jeweils mit einem Führungsband 38 versehen, das ein so genanntes Stoffmodul darstellt, welches in Verbindung mit den Führungsschienen 22A und 22B standardisiert ausgebildet sein kann. Über die Führungsbänder 38 ist die Rollobahn 16 in den Führungsschienen 22A und 22B geführt.

Hierzu greifen die Führungsbänder 38, die jeweils mit dem Zentralabschnitt 36 vernäht sind, jeweils über einen sich in Schienenlängsrichtung erstreckenden Schlitz 40 in die Führungsbahn 30 der betreffenden Führungsschiene 22A bzw. 22B ein. Dort erfährt das Führungsband 38 bezogen auf die Dachquerrichtung, das heißt wie in dem Schnitt nach Figur 3 dargestellt, eine zumindest angenähert U-förmige Umlenkung, so dass das Führungsband 38 zwischen der Unterseite des Kunststoffzahnriemens 28A bzw. 28B und einem Boden 42 der Führungsbahn 30 verpresst ist. Beim Abwickeln der Rollobahn 16 von der Wickelwelle 20 erfahren also die Führungsbänder 38 beim Einlaufen in die Führungsschienen 22A und 22B allein durch die Kunststoffzahnriemen 28A und 28B, die ebenfalls in die Führungsschienen 22A und 22B einlaufen, die zumindest angenähert U-förmige Umlenkung, das heißt ohne die Nutzung weiterer Umlenkmittel. Auf der Wickelwelle 20 ist die Rollobahn 16 einschließlich ihrer Führungsbänder 38 faltenfrei aufgewickelt. Dies ist durch die Elastizität des Materials der Führungsbänder 38 gewährleistet.

An der dem Schlitz 40 abgewandten Seite der Führungsbahn 30, das heißt nach der U-förmigen Umlenkung, erstreckt sich das Führungsband 38 mit seinem freien Randbereich in eine Laschenführung 44, die als Führungsbahn für den freien Randstreifen des Führungsbands 38 angesehen werden kann und sich ebenfalls über die Länge der jeweiligen Führungsschiene 22A bzw. 22B erstreckt.

Der Schlitz 40 ist sowohl von dem Boden 42 als auch von einer Decke 46 der Führungsbahn 30 beabstandet.

Durch die U-förmige Umlenkung des Führungsbandes 38 in der Führungsbahn 30 kann sich das Führungsband 38 an den Verzahnungen 32 und 34 des Kunststoffzahnriemens 28A bzw. 28B verhaken. Insbesondere die Verzahnung 34, die bezogen auf die vertikale Dachlängsmittelebene außen liegt, greift direkt in das Material bzw. den Stoff des Führungsbandes 38 ein. Damit können hohe Haltekräfte aufgebracht werden, die eine Windschott-Funktion der Rolloanordnung 14 zulassen. Halteborsten oder dergleichen an den Zahnriemen sind nicht erforderlich. Vielmehr sind die Zahnriemen 28A und 28B borstenfrei.

Die Führungsbänder 38 oder bei einteiliger Ausbildung die gesamte Rollobahn 16 können bzw. kann aus unterschiedlichen Stoffen, wie einem Gewirke, einem Gewebe, einem Blackout-Stoff oder dergleichen hergestellt sein. Der Stoff kann insbesondere in seinem Eingriffsbereich, das heißt seinem Führungsbereich, der in der Führungsbahn 30 angeordnet ist, speziell behandelt sein und mit einer Appretur, einer Beschichtung, mindestens einem Band und/oder einer speziellen Naht versehen sein. Diese Behandlung erfolgt nach gängigen Fertigungsverfahren, wie Nähen, Schweißen, Tränken, Beschichten, Appretieren oder dergleichen.

Durch Verwendung der standardisierten Führungsbänder 38 können unabhängig von dem Zentralabschnitt 36 gleiche Reibpartner zu den Führungsschienen 22A und 22B und auch zu einem zwischen dem Antriebsritzel 26 und der jeweiligen Führungsschiene 22A bzw. 22B angeordneten Führungsrohr und einem Auslaufrohr für das jeweilige jenseits des Antriebsritzels 26 liegende auslaufende Ende des Kunststoffzahnriemens 28A bzw. 28B realisiert werden.

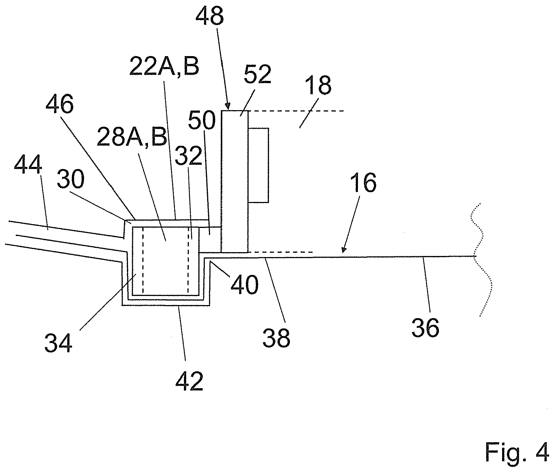

In Figur 4 ist eine alternative Ausführungsform einer Rolloanordnung nach der Erfindung dargestellt. Diese Rolloanordnung unterscheidet sich von der in Figur 3 dargestellten Ausführungsform dadurch, dass sie bezogen auf die vertikale Rollolängsmittelebene beidseits jeweils eine Führungsschiene 22A bzw. 22B aufweist, die mit einer Führungsbahn 30 versehen ist, die an der der Rollolängsmittelebene zugewandten Seite einen Schlitz 40 aufweist, der von einem Boden 42 der Führungsbahn 30 beabstandet ist, aber bis an eine Decke 46 der Führungsbahn 30 herangeführt ist. Über den Schlitz 40 ist die Rollobahn 16 in Querrichtung in die jeweilige Führungsschiene 22A bzw. 22B geführt. Zudem weist diese Rolloanordnung Zahnriemen 28A und 28B auf, die einen im Wesentlichen quadratischen Querschnitt haben, das heißt dessen Höhen/Breiten-Verhältnis etwa 1 beträgt. Insbesondere haben die Kunststoffzahnriemen 28A und 28B im vorliegenden Fall eine Höhe von etwa 5 mm.

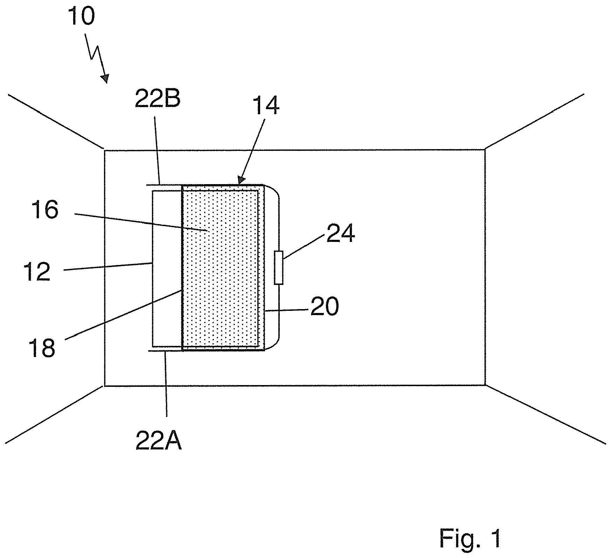

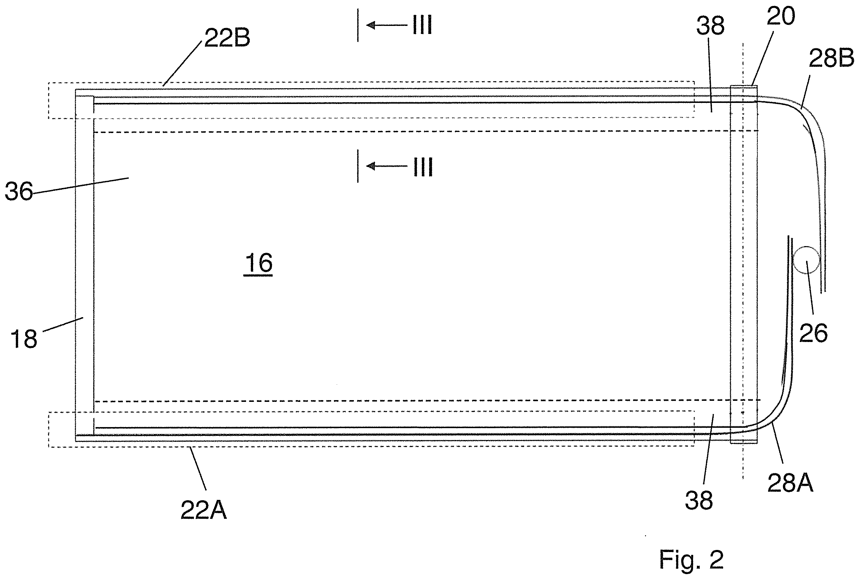

Wie auch bei der Ausführungsform nach den Figuren 1 bis 3 erfahren seitliche Führungsbänder 38 der Rollobahn 16, die an einen Zentralabschnitt 36 beispielsweise über eine Naht angebunden sind, in den Führungsbahnen 30 durch die Zahnriemen 28A und 28B jeweils eine im Wesentlichen U-förmige Umlenkung, so dass sie zwischen dem jeweiligen Kunststoffzahnriemen 28A bzw. 28B und dem Boden 42 der jeweiligen Führungsbahn 30 verpresst sind. Die Verzahnungen 32 und 34 haben jeweils Zähne, die sich rechtwinkelig zur Ebene der Rollobahn 16 von einer Zahnriemenoberseite zu einer Zahnriemenunterseite erstrecken. Wie bei dem oben beschriebenen Ausführungsbeispiel kann sich das Führungsband 38 der Rollobahn 16 an den Verzahnungen 32 und 34 des Kunststoffzahnriemens 28A bzw. 28B verhaken.

Des Weiteren ist bei der in Figur 4 dargestellten Ausführungsform an die Kunststoffzahnriemen 28A und 28B an dem der Wickelwelle abgewandten Ende jeweils ein Kupplungselement 48 nach einem Spritzgießverfahren angeformt. Die Kupplungselemente 48 dienen dazu, die Zahnriemen 28A und 28B mit dem Zugspriegel 18 zu verbinden, und weisen einen Durchtrittsabschnitt 50 auf, der den jeweiligen Schlitz 40 der betreffenden Führungsschiene 22A bzw. 22B durchgreift und den jeweiligen Kunststoffzahnriemen 28A bzw. 28B mit einer an dem Zugspriegel 18 befestigten Verbindungsplatte 52 verbindet.

Im Übrigen entspricht die Ausfuhrungsform nach Figur 4 derjenigen nach den Figuren 1 bis 3.

### Bezugszeichenliste

- 10: Fahrzeugdach
- 12: Dachausschnitt
- 14: Rolloanordnung
- 16: Rollobahn
- 18: Zugspriegel
- 20: Wickelwelle
- 22A, B: Führungsschiene
- 24: Antriebsmotor
- 26: Antriebsritzel
- 28A, B: Kunststoffzahnriemen
- 30: Führungsbahn
- 32: Verzahnung
- 34: Verzahnung
- 36: Zentralabschnitt
- 38: Führungsband
- 40: Schlitz
- 42: Boden
- 44: Laschenführung
- 46: Decke
- 48: Kupplungselement
- 50: Durchtrittsabschnitt
- 52: Befestigungsplatte

## Patentansprüche

1. Rolloanordnung für ein Kraftfahrzeug zur Abschattung eines transparenten Fahrzeugabschnitts, umfassend eine Rollobahn (16), die zu einem Rollowickel aufwickelbar ist und an ihren bezogen auf eine vertikale Rollolängsmittelebene seitlichen Rändern jeweils in einer Führungsschiene (22A, 22B) geführt ist, sowie eine Antriebseinrichtung mit einem Antriebsritzel (26), das zwei Triebmittel antreibt, die jeweils in einer Führungsbahn (30) einer der Führungsschienen (22A, 22B) geführt sind, **dadurch gekennzeichnet, dass** die Triebmittel jeweils als Zahnriemen (28A, 28B) ausgebildet sind, der einen im Wesentlichen rechteckigen Querschnitt hat und an mindestens einer Seite eine Verzahnung (32, 34) aufweist, deren Zähne sich zumindest angenähert rechtwinklig zur Ebene der abgewickelten Rollobahn (16) zwischen einer Zahnriemenunterseite und einer Zahnriemenoberseite erstrecken, wobei die Rollobahn (16) zwischen der Unterseite des Zahnriemens (28A, 28B) und einem Boden (42) der Führungsbahn (30) verpresst ist und in Führungsschienenquerrichtung betrachtet in der Führungsbahn (30) durch den Zahnriemen (28A, 28B) zumindest angenähert U-förmig umgelenkt ist oder die Rollobahn (16) zwischen der Oberseite des Zahnriemens (28A, 28B) und einer Decke (46) der Führungsbahn (30) verpresst ist und in Führungsschienenquerrichtung betrachtet in der Führungsbahn (30) durch den Zahnriemen (28A, 28B) zumindest angenähert umgekehrt U-förmig umgelenkt ist.

2. Rolloanordnung nach Anspruch 1, **dadurch gekennzeichnet, dass** die Führungsbahnen (30) jeweils einen im Wesentlichen rechteckigen Querschnitt haben, der mit dem Querschnitt des jeweiligen Zahnriemens (28A, 28B) korrespondiert, und dass die Rollobahn (16) über einen jeweiligen seitlichen Schlitz (40) in die Führungsbahnen (30) eingeführt ist und in den Führungsbahnen (30) zwischen der betreffenden Führungsschiene (22A, 22B) und dem betreffenden Zahnriemen (28A, 28B) angeordnet ist.

3. Rolloanordnung nach Anspruch 2, **dadurch gekennzeichnet, dass** der Schlitz (40) von dem Boden (42) oder der Decke (46) der jeweiligen Führungsbahn (30) beabstandet ist.

4. Rolloanordnung nach Anspruch 2, **dadurch gekennzeichnet, dass** der Schlitz (40) von dem Boden (42) der jeweiligen Führungsbahn (30) beabstandet ist und sich bis zu der Decke (46) der jeweiligen Führungsbahn (30) erstreckt oder dass der Schlitz von der Decke (46) der jeweiligen Führungsbahn beabstandet ist und sich bis zu dem Boden der jeweiligen Führungsbahn erstreckt.

5. Rolloanordnung nach Anspruch 3 oder 4, **dadurch gekennzeichnet, dass** die Führungsbahnen (30) an der dem Schlitz (40) abgewandten Seite eine Laschenführung (44) aufweisen, in die ein jeweiliger Randstreifen der Rollobahn (16) eingreift.

6. Rolloanordnung nach einem der Ansprüche 1 bis 5, **dadurch gekennzeichnet, dass** die Zahnriemen (28A, 28B) jeweils an zwei einander abgewandten Seiten jeweils eine Verzahnung (32, 34) aufweisen.

7. Rolloanordnung nach einem der Ansprüche 1 bis 6, **dadurch gekennzeichnet, dass** die Rollobahn (16) an ihren bezogen auf die vertikale Rollolängsmittelebene seitlichen Rändern jeweils ein Führungsband (38) aufweist, das mit einem Zentralabschnitt (36) der Rollobahn (16) verbunden ist und das in der jeweiligen Führungsschiene (22A, 22B) geführt ist.

8. Rolloanordnung nach einem der Ansprüche 1 bis 7, **dadurch gekennzeichnet, dass** die Zahnriemen (28A, 28B) jeweils zumindest weitgehend torsionsfrei zwischen dem Antriebsritzel (26) und der jeweiligen Führungsschiene (22A, 22B) geführt sind.

9. Rolloanordnung nach einem der Ansprüche 1 bis 8, **dadurch gekennzeichnet, dass** die Zahnriemen (28A, 28B) jeweils einen Querschnitt haben, dessen Höhen/Breiten-Verhältnis zwischen 0,9 und 1,1 liegt, vorzugsweise etwa 1 beträgt.

10. Rolloanordnung nach einem der Ansprüche 1 bis 9, **dadurch gekennzeichnet, dass** die Zahnriemen (28A, 28B) jeweils eine Höhe zwischen etwa 4 mm und etwa 8 mm haben.

11. Rolloanordnung nach einem der Ansprüche 1 bis 10, **dadurch gekennzeichnet, dass** die Triebmittel jeweils zu einem Zugspriegel (18) geführt sind, der an dem dem Rollowickel abgewandten Rand der Rollobahn (16) angeordnet ist.

12. Rolloanordnung nach Anspruch 11, **dadurch gekennzeichnet, dass** der Zugspriegel bezogen auf die Rollolängsmittelebene beidseits jeweils mit einem Kupplungselement (48) versehen ist, das an dem jeweiligen Zahnriemen (28A, 28B) angebunden ist.

13. Rolloanordnung nach Anspruch 12, **dadurch gekennzeichnet, dass** die Kupplungselemente (48) jeweils in eine Ausnehmung des jeweiligen Zahnriemens formschlüssig eingreifen.

14. Rolloanordnung nach Anspruch 12, **dadurch gekennzeichnet, dass** die Kupplungselemente (48) jeweils nach einem Spritzgießverfahren an den jeweiligen Zahnriemen (28A, 28B) angeformt sind.

## Claims

1. A roller blind arrangement for a motor vehicle for shading a transparent vehicle section, comprising a roller blind web (16) which can be wound up to form a roller blind winding and is guided at its lateral edges in relation to a vertical longitudinal center plane of the roller blind in each case in a guide rail (22A, 22B), as well as a drive device having a drive pinion (26) which drives two driving means each of which is guided in a guide track (30) of one of the guide rails (22A, 22B), **characterized in that** the driving means are each designed as a toothed belt (28A, 28B) which has an essentially rectangular cross section and comprises a toothing (32, 34) on at least one side, the teeth of said toothing (32, 34) extending at least approximately perpendicular to the plane of the unwound roller blind web (16) between a lower side of the toothed belt (28A, 28B) and an upper side of the toothed belt (28A, 28B), wherein the roller blind web (16) is pressed between the lower side of the toothed belt (28A, 28B) and a bottom (42) of the guide track (30) and, when viewed in a transverse direction of the guide rail (22A, 22B), is deviated in the guide track (30) by the toothed belt (28A, 28B) at least approximately U-shaped or the roller blind web (16) is pressed between the upper side of the toothed belt (28A, 28B) and a top (46) of the guide track (30) and, when viewed in a transverse direction of the guide rail (22A, 22B), is deviated in the guide track (30) by the toothed belt (28A, 28B) at least approximately in a reverse U-shape.

2. The roller blind arrangement according to claim 1, **characterized in that** the guide tracks (30) each have an essentially rectangular cross section which corresponds to the cross section of the corresponding toothed belt (28A, 28B) and **in that** the roller blind web (16) is inserted into the guide tracks (30) via a corresponding lateral slot (40) and is arranged in the guide tracks (30) between the corresponding guide rail (22A, 22B) and the corresponding toothed belt (28A, 28B).

3. The roller blind arrangement according to claim 2, **characterized in that** the slot (40) is spaced from the bottom (42) or the top (46) of the corresponding guide track (30).

4. The roller blind arrangement according to claim 2, **characterized in that** the slot (40) is spaced from the bottom (42) of the corresponding guide track (30) and extends to the top (46) of the corresponding guide track (30) or **in that** the slot is spaced from the top (46) of the corresponding guide track (30) and extends to the bottom of the corresponding guide track (30).

5. The roller blind arrangement according to claim 3 or 4, **characterized in that** the guide tracks (30) comprise a tab guide (44) at the side facing away from the slot (40), a corresponding edge strip of the roller blind web (16) engaging into said tab guide (44).

6. The roller blind arrangement according to any one of the claims 1 to 5, **characterized in that** the toothed belts (28A, 28B) each comprise a toothing (32, 34) on two sides facing away from each other.

7. The roller blind arrangement according to any one of the claims 1 to 6, **characterized in that** the roller blind web (16) comprises a guide strap (38) at each lateral edge in relation to the vertical longitudinal center plane of the roller blind, said guide strap (38) being connected to a central portion (36) of the roller blind web (16) and being guided in the corresponding guide rail (22A, 22B).

8. The roller blind arrangement according to any one of the claims 1 to 7, **characterized in that** the toothed belts (28A, 28B) are each guided between the drive pinion (26) and the corresponding guide rail (22A, 22B) at least mostly without torsion.

9. The roller blind arrangement according to any one of the claims 1 to 8, **characterized in that** the toothed belts (28A, 28B) each have a cross section whose height/width ratio is between 0.9 and 1.1, preferably approximately 1.

10. The roller blind arrangement according to any one of the claims 1 to 9, **characterized in that** the toothed belts (28A, 28B) each have a height between approximately 4 mm and 8 mm.

11. The roller blind arrangement according to any one of the claims 1 to 10, **characterized in that** the driving means are each guided to a tension bow (18) which is arranged at the edge of the roller blind web (16) facing away from the roller blind winding.

12. The roller blind arrangement according to claim 11, **characterized in that** the tension bow is provided with a coupling element (48) on both sides in relation to the longitudinal center plane of the roller blind, said coupling element (48) being connected to the corresponding toothed belt (28A, 28B).

13. The roller blind arrangement according to claim 12, **characterized in that** the coupling elements (48) each engage into a recess of the corresponding toothed belt in an interlocking manner.

14. The roller blind arrangement according to claim 12, **characterized in that** the coupling elements (48) are each formed onto the corresponding toothed belt (28A, 28B) according to an injection molding method.

## Revendications

1. Ensemble de store pour une véhicule pour ombrager une zone de véhicule transparente, comprenant une bande de store (16), qui peut être enroulée à un store d'enrouleur et qui est guidée dans un rail de guidage (22A, 22B) par chaque ses bords latéraux relatif à une plane centrale longitudinale verticale de store, ainsi qu'un dispositif d'entraînement ayant un pignon d'entraînement (26), qui entraîne deux moyens d'entraînement, qui sont chacun guidés dans un chemin de guidage (30) d'un des rails de guidage (22A, 22B), **caractérisé en ce que** les moyens d'entraînement sont chacun formés en tant que courroie dentée (28A, 28B), qui a une section transversale essentiellement rectangulaire et comprend une denture (32, 34) sur au moins un côté, les dents de la denture (32, 34) s'étendant au moins approximativement perpendiculairement à une plane de la bande de store (16) déroulée entre un côté inférieur de la courroie dentée (28A, 28B) et un côté supérieur de la courroie dentée (28A, 28B), ladite bande de store (16) étant pressée entre le côté inférieur de la courroie dentée (28A, 28B) et un fond (42) du chemin de guidage (30) et, quand ladite bande de store (16) est regardée dans une direction transversale du rail de guidage (22A, 22B), étant déviée dans le chemin de guidage (30) par la courroie dentée (28A, 28B) au moins approximativement en forme de U ou ladite bande de store (16) étant pressée entre le côté supérieur de la courroie dentée (28A, 28B) et un haut (46) du chemin de guidage (30) et, quand ladite bande de store (16) est regardée dans une direction transversale du rail de guidage (22A, 22B), étant déviée dans le chemin de guidage (30) par la courroie dentée (28A, 28B) au moins environs en forme de U inversée.

2. Ensemble de store selon la revendication 1, **caractérisé en ce que** les chemins de guidage (30) ont chacun une section transversale essentiellement rectangulaire qui correspond à la section transversale de la courroie dentée (28A, 28B) correspondante et **en ce que** la bande de store (16) est insérée dans les chemins de guidage (30) par une fente (40) latérale correspondante et est disposée dans les chemins de guidage (30) entre le rail de guidage (22A, 22B) correspondant et la courroie dentée (28A, 28B) correspondante.

3. Ensemble de store selon la revendication 2, **caractérisé en ce que** la fente (40) est espacée du fond (42) ou le haut (46) du chemin de guidage (30) correspondant.

4. Ensemble de store selon la revendication 2, **caractérisé en ce que** la fente (40) est espacée du fond (42) du chemin de guidage (30) correspondant et s'étend vers le haut (46) du chemin de guidage (30) correspondant ou **en ce que** la fente est espacée du haut (46) du chemin de guidage (30) correspondant et s'étend vers le fond du chemin de guidage (30) correspondant.

5. Ensemble de store selon la revendication 3 ou 4, **caractérisé en ce que** les chemins de guidage (30) comprend un guidage de languette (44) au côté détourné de la fente (40), une bande de bord correspondante de la bande de store (16) s'engageant dans ledit guidage de languette (44).

6. Ensemble de store selon l'une quelconque des revendications 1 à 5, **caractérisé en ce que** les courroies dentées (28A, 28B) comprennent chacune une denture (32, 34) aux deux côtés détournés l'un de l'autre.

7. Ensemble de store selon l'une quelconque des revendications 1 à 6, **caractérisé en ce que** la bande de store (16) comprend une bande de guidage (38) sur chaque bord latéral relatif à la plane centrale longitudinal verticale de store, ladite bande de guidage (38) étant reliée à une zone centrale (36) de la bande de store (16) et étant guidé dans le rail de guidage (22A, 22B) correspondant.

8. Ensemble de store selon l'une quelconque des revendications 1 à 7, **caractérisé en ce que** les courroies dentées (28A, 28B) sont chacune guidées entre le pignon d'entraînement (26) et le rail de guidage (22A, 22B) correspondant au moins presque sans torsion.

9. Ensemble de store selon l'une quelconque des revendications 1 à 8, **caractérisé en ce que** les courroies dentées (28A, 28B) ont chacune une section transversale dont rapport hauteur/largeur est entre 0,9 et 1,1, préférablement environ 1.

10. Ensemble de store selon l'une quelconque des revendications 1 à 9, **caractérisé en ce que** les courroies dentées (28A, 28B) ont chacune une hauteur entre environ 4 mm et 8 mm.

11. Ensemble de store selon l'une quelconque des revendications 1 à 10, **caractérisé en ce que** les moyens d'entraînement sont chacun guidés vers un arceau de tension (18) qui est disposé au bord de la bande de store (16) détourné du store d'enrouleur.

12. Ensemble de store selon la revendication 11, **caractérisé en ce que** l'arceau de tension est pourvu d'un élément de couplage (48) sur tous les deux côtés relatif à la plane centrale longitudinale de store, ledit élément de couplage (48) étant relié à la courroie dentée (28A, 28B) correspondante.

13. Ensemble de store selon la revendication 12, **caractérisé en ce que** les éléments de couplage (48) s'engagent chacun par forme dans un évidement de la courroie dentée correspondante.

14. Ensemble de store selon la revendication 12, **caractérisé en ce que** les éléments de couplage (48) sont chacun formés sur la courroie dentée (28A, 28B) correspondante selon un procédé de moulage par injection.
